# EUROPEAN PATENT APPLICATION

(11) **EP 4 027 341 A1**
(43) Date of publication of application: **13.07.2022**
(21) Application number: 21151020.1
(22) Date of filing: 11.01.2021
(51) Int. Cl.: G11B 27/00, G06F 16/60, G11B 27/10

(54) **MEDIA PROCESSING METHOD, DEVICE AND SYSTEM**

(71) Applicant: Eyeora Limited, London WC2A 2JR (GB)
(72) Inventor: CORAZZI, Daniel, London, WC2A 2JR (GB)
(74) Representative: Carpmaels & Ransford LLP

(57) **Abstract**

Media data, specifically 3D digital media data is processed by receiving a master 3D digital asset comprising master audio data. An auxiliary digital asset comprising auxiliary audio data is also received and processed. A correlation is determined between the master and auxiliary audio data. Time synchronisation data of the auxiliary digital asset is identified relative to the master 3D digital asset based on the determined correlation. The time synchronisation data is stored in memory.

## Description

### Field of Invention

The present invention relates to a computer implemented method, device and system for processing 3D media data, for example for matching a 3D digital asset with an auxiliary digital asset.

### Background

Three-dimensional (3D) digital content, such as 360/180 degree, immersive digital content or virtual reality (VR) videos are becoming ever more commonplace. In recent years, online services such as YouTube^{™} have enabled 360 digital content to be uploaded, accessed and streamed by anyone with an internet connection and an internet connected user device. The user devices which can access and play 3D digital content can vary from conventional computers, smartphones, and tablet devices to virtual reality (VR) headsets, with each type of device giving the user some form of VR experience of the 360 video.

A hurdle to the availability of 3D digital content is the complexity involved in generating it. In particular, hotspot type content can be particularly problematic in terms of its generation because it contains multiple sources of digital media located within different virtual positions of the 3D environment; these sources have been obtained from different physical locations in a real world scene. The individual sources of the digital media content are often recorded independently and then have to be stitched together in a laborious editing process which involves significant user input and manipulation to ensure that the different sources of digital content are synchronised.

For example, a master 3D digital asset may contain various hotspot locations, i.e. positional locations within the master asset from which auxiliary digital assets, such as 2D or further 360/180 degree or 3D content can be accessed and viewed by a user. These auxiliary digital assets are obtained from different auxiliary content generation devices located at different positional locations and having different recording start times within the overall real world scene. When the digital assets are being edited prior to distribution, a content editor will manually manipulate the various digital assets and locate them virtually to different positional locations within the master 3D digital asset; the different positional locations corresponding to the real world location of the content generation device from which the auxiliary digital content was recorded. Since the content generation devices are typically independent of each other and have not been synchronised during the recording process, the content editor must manually align the various items of digital content within the overall digital content roster in order to ensure that there is synchronisation between the digital assets upon playback and when moving between hotspot locations or within the master 3D digital asset.

It is aim of the present invention to solve the aforementioned problems and other problems associated with the processing of 3D digital media.

### Summary

In a first aspect of the invention, there is provided a computer-implemented method for processing 3D media data, the method comprising:
receiving a master 3D digital asset comprising master audio data;
receiving an auxiliary digital asset comprising auxiliary audio data;
determining a correlation between the master audio data and the auxiliary audio data;
identifying time synchronisation data of the auxiliary digital asset, relative to the master 3D digital asset, based on the determined correlation; and
storing the time synchronisation data in memory.

By identifying a time synchronisation based on the determined correlation and storing the time offset, future playback of the auxiliary digital asset can be synchronised with the current playback time point of the master 3D digital asset.

For the purposes of the present disclosure, the master 3D digital asset may comprise 360, VR or 3D video data recorded from a real world scene. The auxiliary digital assets may comprise 2D, 360, VR or 3D video data of the real world scene, or audio data of the real world scene. The master 3D digital asset may be generated via a master content generation device typically comprising 360/3D/VR video capture devices (including associated audio capture capability). The auxiliary digital assets may be generated from one or more auxiliary content generation devices. The auxiliary content generation devices for the auxiliary digital assets typically comprise 2D or 360/3D/VR video capture devices (including associated audio capture capability) or merely an audio capture device.

The step of storing may comprise storing the time synchronisation data in a media database in association with the master 3D digital asset and/or the auxiliary digital asset.

The the step of switching to playing of the auxiliary digital asset based on the identified offset may comprise performing a lookup in the media database of the master 3D digital asset and/or the auxiliary digital asset and identifying the time synchronisation data and utilising the time synchronisation data for playback of the auxiliary digital asset.

The computer-implemented method may further comprise, prior to determining a correlation:
processing the master 3D digital asset to extract the master audio data; and
separately processing auxiliary digital asset to extract the auxiliary audio data;

The step of processing the master 3D digital asset may be a pre-processing step performed upon receipt of the master 3D digital asset by a media processing device.

The step of separately processing the auxiliary digital asset may be a subsequent processing step performed upon receipt of the auxiliary digital asset by a media processing device.

The step of processing the master 3D digital asset may further comprise computing a first Fourier transform of successive segments in time of the master audio data to generate sets of master FT data, each segment having a time offset from a known time within the master audio data.

The step of separately processing the auxiliary digital asset may further comprise computing a second Fourier transform of the auxiliary audio data to generate auxiliary FT data.

Determining a correlation between the master audio data and auxiliary audio data may comprise matching the auxiliary FT data with at least one set of the master FT data by determining a sufficient similarity between the auxiliary FT data and the at least one set of the master FT data.

The step of determining the time synchronisation data may comprise identifying the time offset of the segment of the master audio data corresponding to the matched at least one set of the master FT data.

The 3D digital asset may comprise 360 degree or 180 degree video content and associated master audio data.

The auxiliary digital asset may comprise at least the auxiliary audio data and optionally 3D video content, such as 360 degree or 180 degree video content, or 2D video content.

The computer-implemented method may further comprise providing the user with means for switching from playing the master 3D digital asset to playing of the auxiliary digital asset.

The step of switching to playing of the auxiliary digital asset based on the identified offset may comprise:
detecting activation of the switching means at an activation time corresponding to a current playback time of the 3D digital asset; and
playing the auxiliary digital asset in response to the detected activation of the switching means,
wherein said playing of the auxiliary digital asset is commenced from an auxiliary start time in the auxiliary digital asset which corresponds to said activation time.

The auxiliary start time may be based on the time offset being applied to the current playback time of the 3D digital asset.

The step of determining the auxiliary start time may comprise subtracting the time offset from the current playback time of the master digital asset.

The switching means may be made available at a playback time in the master 3D digital asset corresponding to the earliest possible playback time of the auxiliary digital asset relative to the playback time of the master 3D digital asset, and may be made unavailable at a point in the master 3D digital asset corresponding to the latest point in the auxiliary digital asset.

The switching means may comprise an interactive hotspot located at a virtual positional location within the master 3D digital asset.

The interactive hotspot may activated via user input to a user device.

The master and auxiliary audio data may both comprise audio from a common source.

The the master 3D digital asset and auxiliary digital asset may be uploaded to a server, and the server may be configured to perform the steps of determining the correlation, identifying the time offset and storing the time offset in memory automatically, immediately or via a queue upon receipt by the server of the auxiliary digital.

The delivery of the master 3D digital asset or auxiliary digital asset to the user device can take place from the server and may occur in real time with playback of the master 3D digital asset or auxiliary digital asset on the user device.

The computer-implemented method may further comprise transcoding the master 3D digital asset and auxiliary digital asset, and extracting the first and second audio data from the transcoded 3D digital asset and auxiliary digital asset respectively.

The steps of determining the correlation, identifying the time synchronisation data and storing the time offset in memory may be triggered automatically upon completion of the transcoding and the audio extraction.

The step of identifying time synchronisation data may comprise identifying a time offset of the auxiliary digital asset relative to the master 3D digital asset based on the determined correlation, wherein the time synchronisation data may comprise the time offset.

The time offset may be the difference in start times between the master 3D digital asset and the auxiliary digital asset.

The time offset may be the difference in end times between the master 3D digital asset and the auxiliary digital asset.

In a second aspect of the present invention, there is provided a processing device configured to perform the aforementioned methods.

In a third aspect of the present invention, there is provided a system comprising:
the aforementioned processing device;
a server configured to store the aforementioned master 3D digital asset and aforementioned auxiliary digital asset;
a user device configured to request and obtain the master 3D digital asset and auxiliary digital asset from the server and playback the master 3D digital asset and auxiliary digital asset on a display of the user device,
wherein playback of the auxiliary digital asset is commenced based on the time offset of the auxiliary digital asset relative to the master 3D digital asset when a user indicates to the user device that playback is to be switched from the master 3D digital asset to the auxiliary digital asset.

The server may be a distributed server system. The processing device may be a distributed processing system. The user device may be one or more of a personal computer, e.g. desktop or laptop computer, a tablet device, a mobile device, e.g. a smartphone, and a virtual reality (VR) device, such as a VR headset. The user device may comprise a display, e.g. a display screen, such as a touch sensitive display screen, configured for display of the master 3D digital asset and auxiliary digital asset. The user device, media server and media processing device are each configured to be in communication with each other for transmitting requests for and transmitting and receiving the master 3D digital asset and auxiliary digital asset. Communication between the media processing device, user device and media server may take place via one or more communication links, such as the internet, and the communication links may be wired or wireless, or a combination of the two based on any known network communication protocol.

### Brief Description of the Drawings

The present invention has been described below purely by way of example with reference to the accompanying drawings in which:
Fig. 1 is a component diagram of an overall system in which the invention is implemented.
Fig. 2 is a component diagram of a media processing device of the system of Fig. 1.
Fig. 3 is a component diagram of a 3D content generation system.
Fig. 4 is a flow diagram of the method performed by the media processing device of Fig. 2.
Fig. 5 is depicts the audio signatures identified and processed according the process of Fig. 4.
Fig. 6 is a rendered view of a 3D digital asset as viewed from a 2D viewer/player.

### Detailed Description

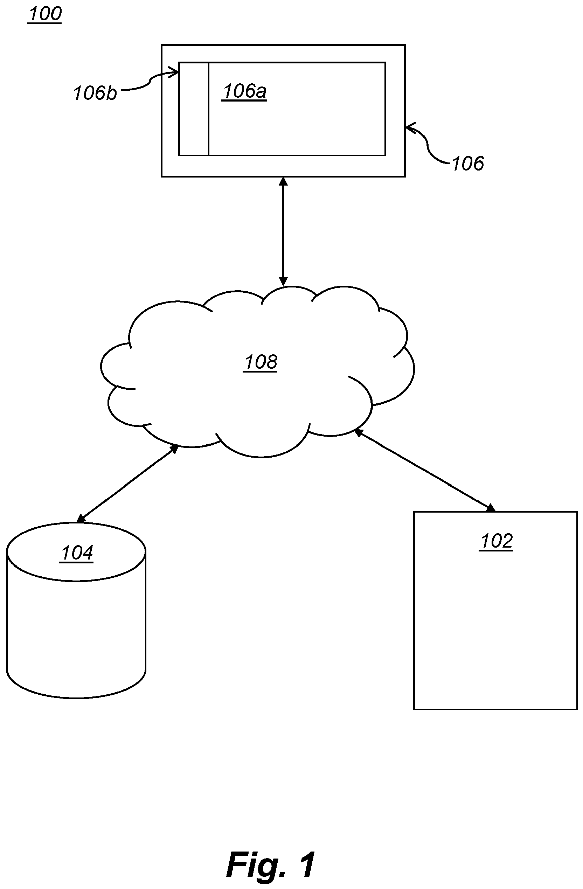

Referring to Fig. 1, there is provided a system 100 for processing and distributing digital media. The system 100 comprises a media processing device 102, a media server 104 and a user device 106. Each of the media processing device 102, the media server 104 and the user device 106 are in communication with each other via the internet 108. The media processing device 102 is configured to process digital assets stored at the media server 104 in accordance with the processes described herein.

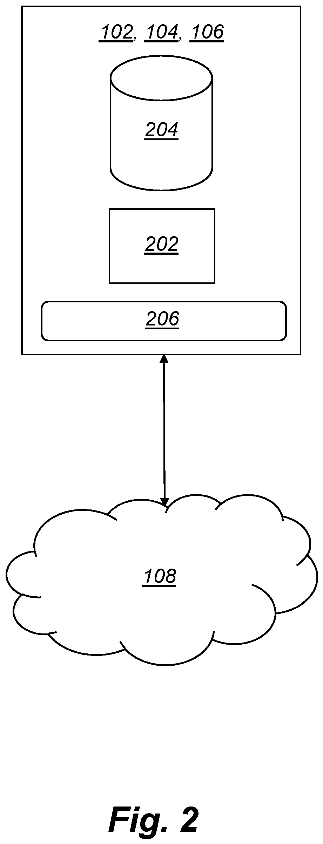

Referring to Fig. 2, additional components of the media processing device 102 are depicted, including a processor 202, memory 204 and communication interface 206. The processor 202 is configured to obtain computer executable code from the memory 204 and executed the computer executable code to perform the processes described herein. The media server 104 and user device 106 may each also be configured with the same type of components in the same fashion as depicted in Fig. 2. The user device 106 may additionally be configured with a display 106a, which may be a display screen, e.g. touch sensitive screen, for displaying digital assets obtained and delivered from the media server 104. A user input device 106b may also be provided which is configured to receive user input into processor 202 and request and obtain digital assets based on such user input. The user input device 106b may be integrated with display 106a, for example as touch sensitive input device integrated into a touch sensitive display. Alternatively the user input device 106b may be completely separate to the display 106a, and be for example a keypad or remote control input device in communication with the processor 202 of the user device 106.

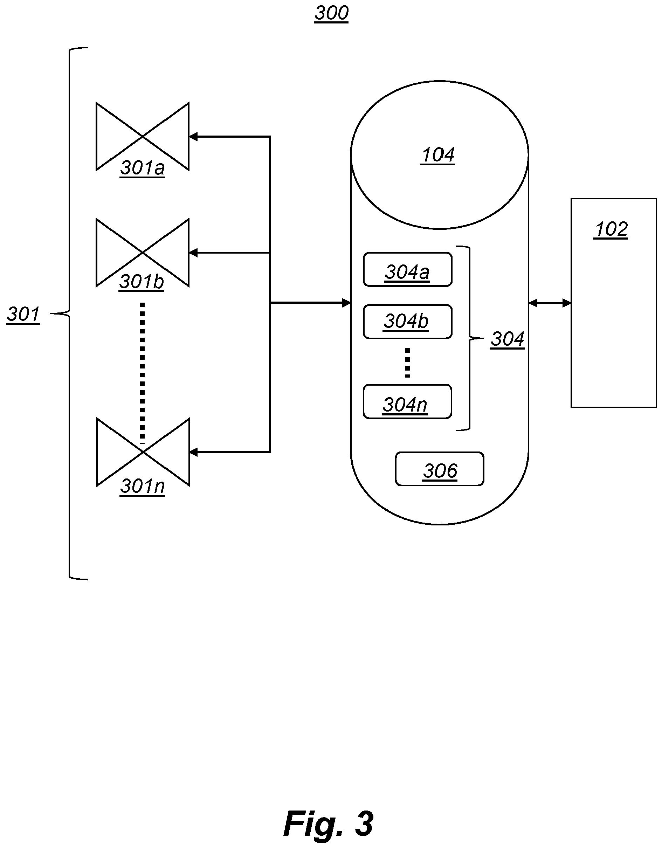

Referring to Fig. 3, a 3D content generation system 300 is depicted comprising a plurality of digital content generation devices 301, with each content generation device 301a .. 301n being configured to acquire and generate digital media assets corresponding to a real world scene, such as, for example, one of: a concert, a theatrical production, an in-person meeting etc. Each content generation device 301a ... 301n is configured to acquire and generate digital assets based on video and/or audio generated from the real world scene. At least one of the content generation devices 301 is a master content generation device 301a, such as 3D video capture device configured to obtain and generate 3D video and audio data for a master 3D digital asset 304a. Such a 3D video capture device typically comprises a plurality of individual video acquisition devices directed at different positions in the real world scene along with associated audio capture, with the resulting video from each acquisition device being stitched together digitally by the 3D video capture device or associated processing device to generate the master 3D digital asset 304a comprising 360 video and audio data of the scene. The 3D video capture device is configured to obtain its 3D video and audio data from a fixed or moving physical location within the real world scene.

Each of the remaining plurality of content generation devices 301b... 301n may be an auxiliary content generation device each configured to generate auxiliary digital media assets of video and audio, and may each comprise one or more of: a further 3D video capture device, a 2D video capture device, an audio capture device. The 3D/2D video capture devices are configured additionally to generate audio data alongside the video data. The audio capture device is configured to generate just audio data. Each auxiliary content generation device is configured to generate its auxiliary digital asset from a fixed or moving auxiliary physical location within the real world scene.

The digital media assets thus generated by the content generation devices 301 comprise at least one master 3D digital asset 304a comprising 360 video and audio data of the real world scene, and one or more auxiliary digital assets 304b...304n comprising 3D, 2D and/or audio data of the real world scene. The master 3D digital asset 304a and one or more auxiliary digital assets 304b...304n thus acquired are transmitted to the media server 104 and stored therein as digital asset files. Storage in the media server 104 of each digital asset can take place in real time, e.g. during capture, or can take place after acquisition, possibly even after a significant delay. For example, a user of an auxiliary content generation device may upload the auxiliary digital asset of the scene during capture, or after some time, for example many days after acquisition. Each digital asset 304 stored in the media server 104 comprises or has associated metadata identifying the real world scene or event captured, along with the time and, optionally physical location data of the content generation device 301 within the real world scene during capture of the asset. The physical location data may be assigned automatically, for example based on an automatic location determination device within the content generation device, or may be assigned later by the user upon upload to the media server 104.

The times of capture of the master 3D digital asset 304a and auxiliary digital assets 304b...304n of the scene may overlap at least in part, but typically the auxiliary digital assets 304b...304n would be timed such that they have been acquired wholly within the capture period of the master 3D digital asset 304a. The start time of each auxiliary digital asset may vary, and since the auxiliary content generation devices 301 b...301 n are independent of each other (possibly acquired completely independently via different users of each auxiliary generation device), there is typically no synchronous time stamp available across each digital asset in relation to when it was acquired with respect to one or more of the other digital assets. In particular, there is no information available concerning the start time of each auxiliary digital asset with respect to a playback time of the master 3D digital asset 304a. In prior art systems, the time synchronisation data between digital assets is assigned by a 360 content editor who manually reviews each digital asset within a content editor and places each asset on a common timeline for all acquired digital assets for the real world scene.

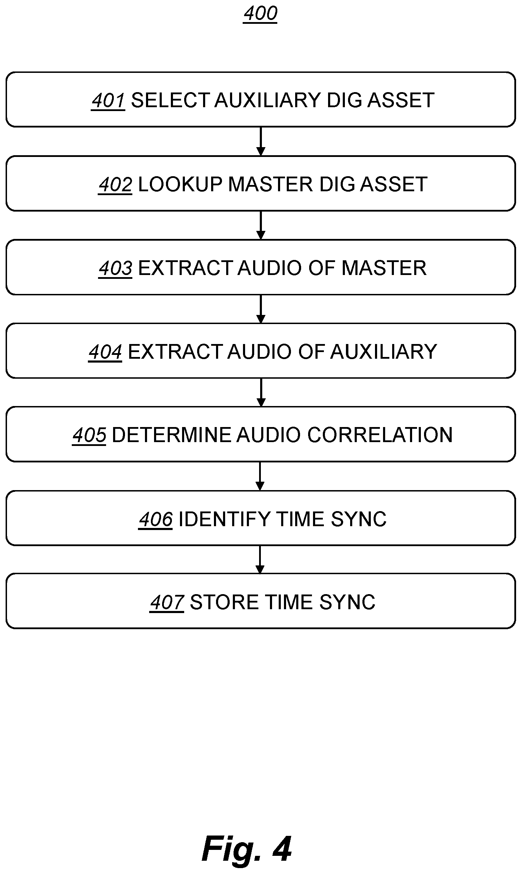

The media server 104 stores each digital asset 304 upon receipt and associates the individual assets 304 within media database 306 to a corresponding virtual scene for which there is at least one corresponding master 3D digital asset 304a. As explained above, metadata is generated including data corresponding to the scene. This data is stored in media server 104 such that a scene identifier for each digital asset 304 links it to a corresponding master 3D digital asset 304a. Media processing device 102 access the media server 104 and acquires each auxiliary digital asset 304b...304n for a given scene identifier and processes each auxiliary digital asset 304b...304n to determine its temporal location within its corresponding master 3D digital asset 304a and store corresponding time synchronisation data for each auxiliary digital asset 304b...304n with the media database 306. This process is explained in further detail below with reference to Fig. 4.

The media processing device 102 can be configured to process each auxiliary digital asset 304b...304n for temporal information in real time as it is uploaded to media server 104. Alternatively, the media processing device 102 can be configured to process each auxiliary digital asset 304b... 304n only upon instigation by a content editor. Either way, a master 3D digital asset 304a must first have been identified and associated based on its corresponding scene identifier to one or more corresponding auxiliary digital assets 304b... 304n.

Referring to Fig. 4, the temporal processing 400 of digital assets by the media processing device 102 is depicted. The media processing device 102 is configured to generate time synchronisation data for each auxiliary digital asset 304b...304n (A1...Aj). In this regard, time synchronisation data is generated automatically by the media processing device 104 for each auxiliary digital asset 304b...304n (A1...Aj) with respect to master 3D digital asset 304a (M) as follows. The time synchronisation data can be generated in real time

In step 401, an auxiliary digital asset is selected for processing by media processing server 102, e.g. via a content editor, or automatically based upon detection or upload into media server 104 and is thereby processed in real time.

In step 402, the auxiliary 3D digital asset (Aj) is identified based on a lookup in the media database 306 for the selected auxiliary digital asset (Aj).

In step 403, master audio data of the master 3D digital asset 304a (M) is extracted by media processing device 102 obtaining the master 3D digital asset 304a (M) from media server 104.

In step 404, auxiliary audio data of the selected auxiliary digital asset (Aj) is extracted by media processing device 102 obtaining the auxiliary digital asset (Aj) from media server 104.

In step 405, the media processing device 102 determines a correlation between the master and auxiliary audio data.

In step 406, time synchronisation data of the selected auxiliary digital asset (Aj) relative to the master 3D digital asset is identified based on the determined correlation.

In step 407, the time synchronisation data is stored in memory of the media server 104, for example in media database 306.

The time synchronisation data identified may be a time offset of the start or end time of the selected auxiliary digital asset relative to the master 3D digital asset.

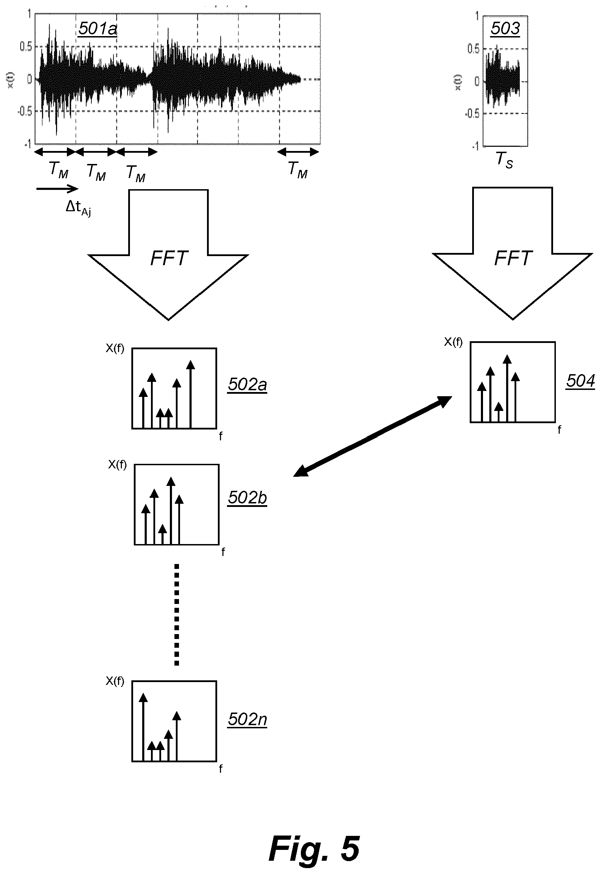

In further embodiment of step 405, the media processing device 102 identifies common audio signatures in the master audio data 501a and auxiliary audio data 501b... 501n and matches the identified audio signatures to each other so as to determine a temporal position (Δt_{Aj}) of the selected auxiliary digital asset (Aj) relative to the master 3D digital asset. In a further embodiment as explained with reference to Fig. 5, the audio signatures are identified and matched by:
1. computing an auxiliary Fourier transform of a sample or the whole (Tₛ) of the auxiliary audio data 503 as it is received by the media processing device 102, to output auxiliary Fourier transformed (FT) data 504;
2. computing multiple master Fourier transforms of the master audio data 501a over a sample time (window length; T_{M}), across the entire time domain signal of the master audio data 501a, to thereby output multiple sets of master Fourier transformed (FT) data 502a...502n corresponding to successive time segments in the master audio data having successive segment start times;
3. determining the similarity of the auxiliary FT data 504 to one or more sets of the master FT data 502a...502n and identifying a match by a sufficiently similar one 502b of the sets of master FT data 502a...502n with the output auxiliary FT data 504; and

The sample time (T_{M}) may match or be similar to the sample time or whole length (Tₛ) of the auxiliary audio data 503.

Specifically in one implementation of step 3, for each successive set of master FT data, the following steps can be performed:
a) computing a conjugate of the auxiliary FT data 504;
b) computing a product of the conjugate and the given one set of master FT data 502a...502n to determine the correlation of the auxiliary FT data 504 and the given one set of master FT data 502a...502n; and
c) computing a Fourier transform of the product of step b to generate FT product data.
d) if the FT product data (step c) exceeds a threshold matching (power) value or is sufficiently close to a matching (power) value, then a positive determination of a match between the auxiliary FT data 504 and the given set of the master FT data 502b is made, and the corresponding start time point (Δt_{Aj}) within the master audio data 501 corresponding to the given set of master FT data 502b is used for time synchronisation data.

The time synchronisation data thus identified is an identified start time point, namely a time offset (Δt_{Aj}) within the master 3D digital asset 304a, of the given auxiliary digital asset (j) corresponding to the auxiliary audio data and its given auxiliary FT data. This time offset (Δt_{Aj}) is stored in the media database 306 associated with the given auxiliary digital asset (j).

In implementations of the above step 405, discrete Fourier transforms (DFTs) are used for the Fourier transforms to process the digital audio signal data 501, 503 of the master and auxiliary digital assets. More specifically, fast Fourier transforms (FFT) are used.

The master FT data 502a...502n may be pre-generated according to step 2 immediately by media processing device 102 upon upload of the master digital asset 304a (M) into the media server 104, and pre-stored for processing later with steps 1 and 3, as each auxiliary digital asset 304b...304n (Aj) is uploaded into media server 104.

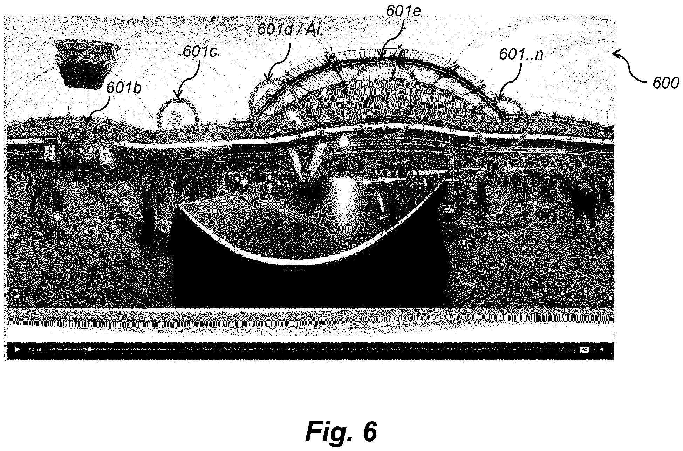

Referring to Fig. 6, a snapshot rendered view of the master 3D digital asset is depicted showing a 2D representation 601 of a 360 virtual scene corresponding to the real world scene captured by the master content generation device 301a and being played back on the user device 106. With user input obtained via user input device 106b, the field of view of the 360 virtual scene will change, for example if the user device 106 is a VR headset, then movement of the user's head will cause the field of view during playback of the master 3D digital asset to change corresponding to the detected head movement from the VR headset. Other forms of directional user input may also adapt the field of view displayed, for example user input received by a keypad or touch control on the display 106a.

The rendered view may be depicted on the display 106a of the user device 106 which has acquired the master 3D digital asset 304a from media server 104. The master 3D digital asset 304a comprises video and audio data of the real world scene. In addition, the master 3D digital asset 304a includes auxiliary asset location identifiers 601 (601 b ...601 n) ("hotspots") of the locations within the 360 virtual scene of one or more auxiliary digital assets 304b...304n each acquired from one or more of the auxiliary content generation devices 301 b... 301n when they were positioned within the real world scene during acquisition of the master 3D digital asset 304a. As explained above, each auxiliary digital asset has associated metadata including location data indicative of the physical location within the real world scene, and thus correspondingly location data of its virtual location within the master 3D digital asset 304a, such that the master 3D digital asset 304a includes such location data for displaying the corresponding location identifier 601 for each digital asset at its virtual location during playback. Each auxiliary asset location identifier 601 can be activated during playback upon user input via input device 106b to cause the user device 106 to start playback of the selected auxiliary digital asset (Ai) corresponding to the location identifier 601d selected. Each location identifier 601 may be displayed (or made available for selection) within the master 3D digital asset scene only for the time period during which it exists within the master 3D digital asset scene. Thus, if an auxiliary digital asset is only available for a portion of the time (such that it starts part way through the master 3D digital asset 304a and/or finishes before the end of the master 3D digital asset 304a), its corresponding location identifier 601 will only be displayed or made available for that corresponding period of time.

When a given asset location identifier 601d is activated to start playback of one auxiliary digital asset (Ai) of the plurality of auxiliary digital assets 304b... 304n corresponding to the location identifier 601 d selected, the media processing device 102 accesses the media server 104 and media database 306 to obtain the time offset (Δt_{Ai}) previously stored corresponding to the selected auxiliary digital asset (Ai). This time offset represents the start time of the selected auxiliary digital asset (Ai) within the master 3D digital asset 304a (M). A auxiliary asset playback start time (t_{Aip}) for the selected auxiliary digital asset is determined based on the time offset (At_{Ai}) and current master asset playback time (t_{Mp}) of the master 3D digital asset, for example by t_{Aip} = t_{Mp} - Δt_{Ai}. The auxiliary asset playback start time (tAᵢₚ) and selected auxiliary digital asset (Ai) is then provided to the user device 106 and playback of the selected auxiliary digital asset (Ai) commences from playback start time (tAᵢₚ).

The present disclosure provides at least the following numbered embodiments:
1. A computer-implemented method for processing 3D media data, the method comprising:
   receiving a master 3D digital asset comprising master audio data;
   receiving an auxiliary digital asset comprising auxiliary audio data;
   determining a correlation between the master audio data and the auxiliary audio data;
   identifying time synchronisation data of the auxiliary digital asset, relative to the master 3D digital asset, based on the determined correlation; and
   storing the time synchronisation data in memory.
2. The computer-implemented method of embodiment 1, further comprising:
   delivering, to a user device, the master 3D digital asset and the auxiliary digital asset, playing the master 3D digital asset; and
   switching to playing of the auxiliary digital asset based on the time synchronisation data.
3. The computer-implemented method of embodiment 1 or embodiment 2, wherein the step of storing comprises storing the time synchronisation data in a media database in association with the master 3D digital asset and/or the auxiliary digital asset.
4. The computer-implemented method of embodiment 3, wherein the step of switching to playing of the auxiliary digital asset based on the identified offset comprises performing a lookup in the media database of the master 3D digital asset and/or the auxiliary digital asset and identifying the time synchronisation data and utilising the time synchronisation data for playback of the auxiliary digital asset.
5. The computer-implemented method of any one of the preceding embodiments, further comprising, prior to determining a correlation:
   processing the master 3D digital asset to extract the master audio data; and
   separately processing auxiliary digital asset to extract the auxiliary audio data;
6. The computer-implemented method of embodiment 5, wherein the step of processing the master 3D digital asset is a pre-processing step performed upon receipt of the master 3D digital asset by a media processing device.
7. The computer-implemented method of embodiment 6 or embodiment 5, wherein the step of separately processing the auxiliary digital asset is a subsequent processing step performed upon receipt of the auxiliary digital asset by a media processing device.
8. The computer-implemented method of any one of embodiments 5 to 7,
   wherein the step of processing the master 3D digital asset further comprises computing a first Fourier transform of successive segments in time of the master audio data to generate sets of master FT data, each segment having a time offset from a known time within the master audio data,
   wherein the step of separately processing the auxiliary digital asset further comprises computing a second Fourier transform of the auxiliary audio data to generate auxiliary FT data;
   wherein determining a correlation between the master audio data and auxiliary audio data comprises matching the auxiliary FT data with at least one set of the master FT data by determining a sufficient similarity between the auxiliary FT data and the at least one set of the master FT data,
   wherein the step of determining the time synchronisation data comprises identifying the time offset of the segment of the master audio data corresponding to the matched at least one set of the master FT data.
9. The computer-implemented method of any one of the preceding embodiments, wherein the 3D digital asset comprises 360 degree or 180 degree video content and associated master audio data.
10. The computer-implemented method of any one of the preceding embodiments, wherein the auxiliary digital asset comprises at least the auxiliary audio data and optionally 3D video content, such as 360 degree or 180 degree video content, or 2D video content.
11. The computer-implemented method of embodiment 2 or any embodiment dependent thereon, further comprising providing the user with means for switching from playing the master 3D digital asset to playing of the auxiliary digital asset.
12. The computer-implemented method of embodiment 11, wherein the step of switching to playing of the auxiliary digital asset based on the identified offset comprises:
   detecting activation of the switching means at an activation time corresponding to a current playback time of the 3D digital asset; and
   playing the auxiliary digital asset in response to the detected activation of the switching means,
   wherein said playing of the auxiliary digital asset is commenced from an auxiliary start time in the auxiliary digital asset which corresponds to said activation time.
13. The computer-implemented method of embodiment 12, further comprising determining the auxiliary start time based on the time offset being applied to the current playback time of the 3D digital asset.
14. The computer-implemented method of embodiment 13, wherein the step of determining the auxiliary start time comprises subtracting the time offset from the current playback time of the master digital asset.
15. The computer-implemented method of any one of embodiments 12 to 14, wherein the switching means are made available at a playback time in the master 3D digital asset corresponding to the earliest possible playback time of the auxiliary digital asset relative to the playback time of the master 3D digital asset, and are made unavailable at a point in the master 3D digital asset corresponding to the latest point in the auxiliary digital asset.
16. The computer-implemented method of any one of embodiments 12 to 15, wherein the switching means comprises an interactive hotspot located at a virtual positional location within the master 3D digital asset.
17. The computer-implemented method of embodiment 16 wherein the interactive hotspot is activated via user input to a user device.
18. The computer-implemented method of any one of the preceding embodiments, wherein the master and auxiliary audio data both comprise audio from a common source.
19. The computer-implemented method of any one of the preceding embodiments, wherein the master 3D digital asset and auxiliary digital asset are uploaded to a server, and wherein the server is configured to perform the steps of determining the correlation, identifying the time offset and storing the time offset in memory automatically, immediately or via a queue upon receipt by the server of the auxiliary digital.
20. The computer-implemented method of embodiment 19 when dependent on embodiment 2, wherein the delivery of the master 3D digital asset or auxiliary digital asset to the user device is from the server and occurs in real time with playback of the master 3D digital asset or auxiliary digital asset on the user device.
21. The computer-implemented method of any one of the preceding embodiments, further comprising transcoding the master 3D digital asset and auxiliary digital asset, and extracting the first and second audio data from the transcoded 3D digital asset and auxiliary digital asset respectively.
22. The computer implemented method of embodiment 21, wherein the steps of determining the correlation, identifying the time synchronisation data and storing the time offset in memory are triggered automatically upon completion of the transcoding and the audio extraction.
23. The computer implemented method of any one of the preceding embodiments, wherein the step of identifying time synchronisation data comprises identifying a time offset of the auxiliary digital asset relative to the master 3D digital asset based on the determined correlation, wherein the time synchronisation data comprises the time offset.
24. The computer implemented method of embodiment 23, wherein the time offset is the difference in start or end time between the master 3D digital asset and the auxiliary digital asset.
25. A processing device configured to perform the method of any one of the preceding embodiments.
26. A system comprising:
   the processing device of embodiment 25;
   a server configured to store the master 3D digital asset and auxiliary digital asset;
   a user device configured to request and obtain the master 3D digital asset and auxiliary digital asset from the server and playback the master 3D digital asset and auxiliary digital asset on a display of the user device,
   wherein playback of the auxiliary digital asset is commenced based on the time synchronisation data of the auxiliary digital asset relative to the master 3D digital asset when a user indicates to the user device that playback is to be switched from the master 3D digital asset to the auxiliary digital asset.

The present invention has been described above by way of example only. It will be appreciated that modifications are possible within the scope of the appended claims.

## Claims

1. A computer-implemented method for processing 3D media data, the method comprising:
receiving a master 3D digital asset comprising master audio data;
receiving an auxiliary digital asset comprising auxiliary audio data;
determining a correlation between the master audio data and the auxiliary audio data;
identifying time synchronisation data of the auxiliary digital asset, relative to the master 3D digital asset, based on the determined correlation; and
storing the time synchronisation data in memory.

2. The computer-implemented method of claim 1, further comprising:
delivering, to a user device, the master 3D digital asset and the auxiliary digital asset,
playing the master 3D digital asset; and
switching to playing of the auxiliary digital asset based on the time synchronisation data.

3. The computer-implemented method of claim 1 or claim 2, wherein the step of storing comprises storing the time synchronisation data in a media database in association with the master 3D digital asset and/or the auxiliary digital asset.

4. The computer-implemented method of claim 3, wherein the step of switching to playing of the auxiliary digital asset based on the identified offset comprises performing a lookup in the media database of the master 3D digital asset and/or the auxiliary digital asset and identifying the time synchronisation data and utilising the time synchronisation data for playback of the auxiliary digital asset.

5. The computer-implemented method of any one of the preceding claims, further comprising, prior to determining a correlation:
processing the master 3D digital asset to extract the master audio data; and
separately processing auxiliary digital asset to extract the auxiliary audio data;

6. The computer-implemented method of claim 5, wherein the step of processing the master 3D digital asset is a pre-processing step performed upon receipt of the master 3D digital asset by a media processing device.

7. The computer-implemented method of claim 6 or claim 5, wherein the step of separately processing the auxiliary digital asset is a subsequent processing step performed upon receipt of the auxiliary digital asset by a media processing device.

8. The computer-implemented method of any one of claims 5 to 7,
wherein the step of processing the master 3D digital asset further comprises computing a first Fourier transform of successive segments in time of the master audio data to generate sets of master FT data, each segment having a time offset from a known time within the master audio data,
wherein the step of separately processing the auxiliary digital asset further comprises computing a second Fourier transform of the auxiliary audio data to generate auxiliary FT data;
wherein determining a correlation between the master audio data and auxiliary audio data comprises matching the auxiliary FT data with at least one set of the master FT data by determining a sufficient similarity between the auxiliary FT data and the at least one set of the master FT data,
wherein the step of determining the time synchronisation data comprises identifying the time offset of the segment of the master audio data corresponding to the matched at least one set of the master FT data.

9. The computer-implemented method of any one of the preceding claims, wherein the 3D digital asset comprises 360 degree or 180 degree video content and associated master audio data.

10. The computer-implemented method of any one of the preceding claims, wherein the auxiliary digital asset comprises at least the auxiliary audio data and optionally 3D video content, such as 360 degree or 180 degree video content, or 2D video content.

11. The computer-implemented method of claim 2 or any claim dependent thereon, further comprising providing the user with means for switching from playing the master 3D digital asset to playing of the auxiliary digital asset.

12. The computer-implemented method of claim 11, wherein the step of switching to playing of the auxiliary digital asset based on the identified offset comprises:
detecting activation of the switching means at an activation time corresponding to a current playback time of the 3D digital asset; and
playing the auxiliary digital asset in response to the detected activation of the switching means,
wherein said playing of the auxiliary digital asset is commenced from an auxiliary start time in the auxiliary digital asset which corresponds to said activation time.

13. A processing device configured to perform the method of any one of the preceding claims.

14. A system comprising:
the processing device of claim 13;
a server configured to store the master 3D digital asset and auxiliary digital asset;
a user device configured to request and obtain the master 3D digital asset and auxiliary digital asset from the server and playback the master 3D digital asset and auxiliary digital asset on a display of the user device,
wherein playback of the auxiliary digital asset is commenced based on the time synchronisation data of the auxiliary digital asset relative to the master 3D digital asset when a user indicates to the user device that playback is to be switched from the master 3D digital asset to the auxiliary digital asset.

## Amended claims

### Amended claims in accordance with Rule 137(2) EPC.

1. A computer-implemented method (400) for processing 3D media data, the method comprising:
receiving a master 3D digital asset (304a) comprising master audio data (501a) of a real world scene;
receiving an auxiliary digital asset (304b...304n) comprising auxiliary audio data (503) of the real world scene;
determining (405) a correlation between the master audio data and the auxiliary audio data;
identifying (406) time synchronisation data of the auxiliary digital asset, relative to the master 3D digital asset, based on the determined correlation; and
storing (407) the time synchronisation data in memory.

2. The computer-implemented method of claim 1, further comprising:
delivering, to a user device (106), the master 3D digital asset and the auxiliary digital asset,
playing the master 3D digital asset (304a); and
switching to playing of the auxiliary digital asset (304b... 304n) based on the time synchronisation data.

3. The computer-implemented method of claim 1 or claim 2, wherein the step of storing (407) comprises storing the time synchronisation data in a media database (306) in association with the master 3D digital asset and/or the auxiliary digital asset.

4. The computer-implemented method of claim 3, wherein the step of switching to playing of the auxiliary digital asset based on the identified offset comprises performing a lookup in the media database (306) of the master 3D digital asset and/or the auxiliary digital asset and identifying the time synchronisation data and utilising the time synchronisation data for playback of the auxiliary digital asset.

5. The computer-implemented method of any one of the preceding claims, further comprising, prior to determining a correlation:
processing the master 3D digital asset to extract the master audio data (501a); and
separately processing auxiliary digital asset to extract the auxiliary audio data (503).

6. The computer-implemented method of claim 5, wherein the step of processing the master 3D digital asset is a pre-processing step performed upon receipt of the master 3D digital asset by a media processing device (102).

7. The computer-implemented method of claim 6 or claim 5, wherein the step of separately processing the auxiliary digital asset is a subsequent processing step performed upon receipt of the auxiliary digital asset by a media processing device (102).

8. The computer-implemented method of any one of claims 5 to 7,
wherein the step of processing the master 3D digital asset further comprises computing a first Fourier transform of successive segments in time of the master audio data to generate sets of master FT data (502a...502n), each segment having a time offset from a known time within the master audio data,
wherein the step of separately processing the auxiliary digital asset further comprises computing a second Fourier transform of the auxiliary audio data to generate auxiliary FT data (504);
wherein determining a correlation between the master audio data and auxiliary audio data comprises matching the auxiliary FT data with at least one set of the master FT data by determining a sufficient similarity between the auxiliary FT data and the at least one set of the master FT data (502b),
wherein the step of determining the time synchronisation data comprises identifying the time offset of the segment of the master audio data corresponding to the matched at least one set of the master FT data.

9. The computer-implemented method of any one of the preceding claims, wherein the 3D digital asset comprises 360 degree or 180 degree video content and associated master audio data.

10. The computer-implemented method of any one of the preceding claims, wherein the auxiliary digital asset comprises at least the auxiliary audio data and optionally 3D video content, such as 360 degree or 180 degree video content, or 2D video content.

11. The computer-implemented method of claim 2 or any claim dependent thereon, further comprising providing the user with means for switching from playing the master 3D digital asset to playing of the auxiliary digital asset.

12. The computer-implemented method of claim 11, wherein the step of switching to playing of the auxiliary digital asset based on the identified offset comprises:
detecting activation of the switching means at an activation time corresponding to a current playback time of the 3D digital asset; and
playing the auxiliary digital asset in response to the detected activation of the switching means,
wherein said playing of the auxiliary digital asset is commenced from an auxiliary start time in the auxiliary digital asset which corresponds to said activation time.

13. A processing device (102) configured to perform the method of any one of the preceding claims.

14. A system (100) comprising:
the processing device (102) of claim 13;
a server (104) configured to store the master 3D digital asset and auxiliary digital asset;
a user device (106) configured to request and obtain the master 3D digital asset and auxiliary digital asset from the server and playback the master 3D digital asset and auxiliary digital asset on a display (106a) of the user device,
wherein playback of the auxiliary digital asset is commenced based on the time synchronisation data of the auxiliary digital asset relative to the master 3D digital asset when a user indicates to the user device that playback is to be switched from the master 3D digital asset to the auxiliary digital asset.
